# EUROPÄISCHE PATENTSCHRIFT

(11) **EP 3 557 096 B1**
(45) Veröffentlichungstag und Bekanntmachung des Hinweises auf die Patenterteilung: **13.04.2022**
(21) Anmeldenummer: 18168493.7
(22) Anmeldetag: 20.04.2018
(51) Int. Cl.: F16H 25/22, F16H 25/24, B62D 5/04, F16H 25/20

(54) **VERFAHREN ZUR UNWUCHTKOMPENSATION UND KUGELGEWINDETRIEB MIT KRAFTÜBERTRAGUNGSELEMENT GEMÄSS DIESEM VERFAHREN**
IMBALANCE COMPENSATION METHOD UND BALL SCREW DRIVE WITH POWER TRANSMISSION ELEMENT ACCORDING TO THIS METHOD
MÉTHODE DE COMPENSATION D'ÉQUILIBRAGE ET ENTRAÎNEMENT À VIS À BILLE COMPRENANT UN ÉLÉMENT DE TRANSMISSION DE FORCES DIMENSIONNÉ AVEC CETTE MÉTHODE

(43) Veröffentlichungstag der Anmeldung: 23.10.2019
(73) Patentinhaber: SFS Group International AG, 9435 Heerbrugg (CH)
(72) Erfinder: PERIC, Edi, 9410 Heiden (CH); FREI, Stefan, 9443 Widnau (CH); SCHÄDLICH, André, 9469 Haag (CH); ZACH, Marijo, 9443 Widnau (CH)

(56) Entgegenhaltungen:
- EP-A1- 2 713 078
- DE-A1- 10 022 715
- DE-A1-102008 002 627
- DE-A1-102010 046 613
- JP-A- H11 344 094
- JP-A- 2010 048 276
- US-A- 5 809 838

## Beschreibung

Die vorliegende Erfindung befasst sich mit einem Kugelgewindetrieb, mit einem die Spindelmutter umgreifenden Kraftübertragungselement, welches zur Kraftableitung Merkmale der Spindelmutter nutzt, die wiederum dem Unwuchtausgleich dienen. Die Spindelmutter wird hierbei gemäss einem Verfahren zur Unwuchtkompensation ausgelegt.

### TECHNISCHER HINTERGRUND

Als Kugelumlaufspindel oder auch Kugelgewindetrieb (KGT) wird üblicherweise ein Wälzschraubtrieb bezeichnet mit Kugeln als Wälzkörper. Technisch gesehen funktioniert ein Kugelgewindetrieb als Schraubgetriebe, dessen Unter- bzw. Übersetzung durch die Dimensionierung der Gewindespindel, genauer durch die Steigung des Gewindes bestimmt wird. Kugelgewindetriebe werden in vielen technischen Anwendungen eingesetzt, vor allem im Maschinenbau und dort bevorzugt in Werkzeugmaschinen. Zunehmend kommen Kugelgewindetrieb aber auch als Längsantriebe in Bereichen zum Einsatz, wo bisher meist Hydrauliksysteme Verwendung fanden, z.B. in Spritzgiessmaschinen und Servolenkungen. Zudem spielen Kugelgewindetrieb auch eine zunehmende Rolle in elektromechanischen und elektro-hydraulischen Bremssystemen, wo Kugelgewindetriebe als Ersatz für hydraulische Bremszylinder oder parallel zu bekannten Bremssystemen als Betätigungselement von Bremsassistenzsystemen eingesetzt werden.

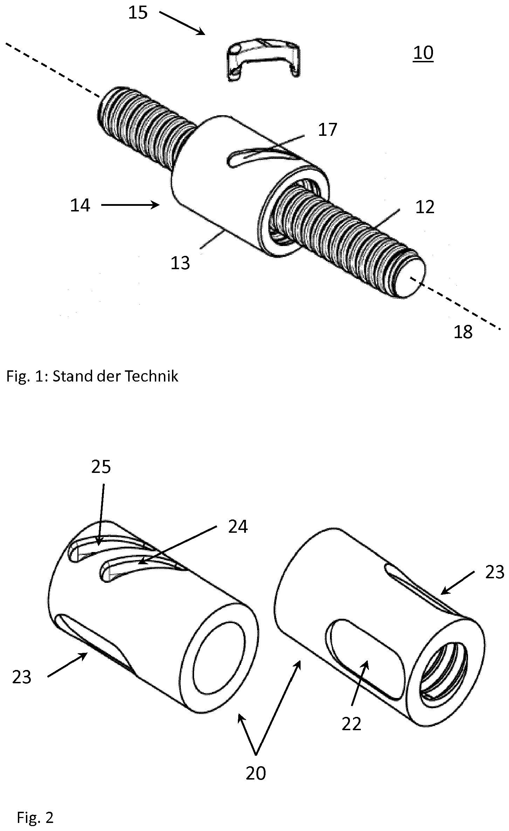

Ein Kugelgewindetrieb gemäss Stand der Technik ist in Figur 1 abgebildet. Zu den Hauptbestandteilen des Kugelgewindetriebs 10 zählen eine Gewindespindel 12 und eine diese Spindel umgreifende Spindelmutter 14. Zwischen diesen beiden Bauteilen laufen im Betrieb Kugeln um, wobei die Gewindezüge der Gewindespindel 12 wie auch der Spindelmutter 14 komplementär ausgebildet und so aufeinander abgestimmt sind, dass sie als Kugelführungen wirken.

Die Spindelmutter 14 besteht aus einem Mutterkörper 13, der (mindestens) eine Öffnung 17 für eine Kugelumlenkung 15 aufweist. Diese Kugelumlenkung 15 ist hier als Einsatzelement gezeigt, welches in der Öffnung 17 versenkt wird. Die Umlenkung hat die Aufgabe, die Kugeln an einer ersten Stelle aus der Kugelführung zwischen Spindelmutter 14 und Gewindespindel 12 herauszuheben und an einer zweiten Stelle zurückzuführen. Die Kugelrückführung stellt also einen Bypass dar, der mindestens eine, häufig mehrere Gewindezüge des Mutter-Spindelsystems überbrückt. Dadurch entsteht ein geschlossener Umlaufpfad für die Kugeln des Kugelgewindetriebes 10.

Durch die Konstruktion der Spindelmutter bedingt ist diese häufig nicht symmetrisch um ihre zentrale Rotationsachse aufgebaut. Gerade die Kugelrückführung oder Kugelumlenkung sorgt dafür, dass die Hauptträgheitsachse der Spindelmutter nicht mehr mit der Rotationsachse, die durch die axiale Mittelachse 18 der Spindel definiert wird, zusammenfällt.

Dieser Zustand führt zu einer dynamischen Unwucht der im Betrieb rotierenden Spindelmutter. Das äussert sich in erhöhter Belastung von Lagerteilen, Befestigungen und folglich in erhöhtem Verschleiss des Gesamtsystems. Zudem werden durch die dynamischen Unwuchten Vibrationen hervorgerufen, die zu hörbaren Betriebsgeräuschen führen, was häufig unerwünscht ist.

Nun ist es bekannt, dass durch ein Hinzufügen bzw. Weglassen von Gewichtselementen am richtigen Ort die Unwucht eines rotierenden Körpers vermieden bzw. wesentlich verringert werden kann. Dies kann bei einem Massenproduktionsteil beispielsweise an Prototypen erprobt und danach in Serie umgesetzt werden.

Eine Methode zur Beseitigung der Unwucht besteht darin, möglichst identische, jedoch spiegelsymmetrische Ausnehmungen wie für die Kugelumlenkung(en) in der Spindelmutter vorzusehen und um 180° axial versetzt anzubringen. Alternativ können auch zwei solche Ausgleichsausnehmungen je um 120° axial versetzt vorgesehen werden. In Bezug auf eine durch die Kugelumlenkung verursachte Unwucht ist dies jedoch wegen der komplizierten Geometrie aufwändig.

Figur 2 zeigt einen Spindelmutterkörper 20 mit zwei Ausnehmungen 24 und 25, welche für Kugelrückführkanäle vorgesehenen Öffnungen (Ausfräsungen bzw. Aussparungen) darstellen. Zwei Ausnehmungen 22, 23 sind vorgesehen zur Kompensation der Unwucht, die durch die Kugelumlenkung(en) hervorgerufen wird. Die Ausnehmungen 22, 23 sind als Nuten mit ebenem Boden dargestellt, was fertigungstechnisch vorteilhaft ist, aber von dem vorgenannten Rezept der spiegelsymmetrischen Aussparungen abweicht.

Kugelgewindetriebe werden üblicherweise so eingesetzt, dass entweder die Gewindespindel ortsfest ist und angetrieben wird, so dass sich die Spindelmutter entlang der Spindel bewegen kann oder umgekehrt. In jedem Fall müssen bei Spindel wie auch Spindelmutter Elemente vorgesehen werden, die es erlauben, das Bauteil sicher festzuhalten oder anzutreiben; mit anderen Worten ein Drehmoment ein- oder abzuleiten.

Häufig werden hierzu Zahnräder verwendet, die als separates Bauteil gefertigt und auf die Spindelmutter aufgepresst, verschweisst oder verklebt werden können. Alternativ sind auch andere Kraftübertragungselemente denkbar wie Reibräder, Zahnriemenscheiben oder dergleichen. Unter dem Begriff Kraftübertragungselement sollen daher alle Maschinenelemente verstanden werden, die es erlauben, Drehmomente auf oder von der Spindelmutter zu übertragen.

### STAND DER TECHNIK

Die DE 10 2008 002 627 A1 beschreibt einen Kugelgewindetrieb, dessen Spindelmutter Ausgleichsmittel aufweist, welche einer durch die einseitige Kugelrückführung entstehende Unwucht entgegenwirken und so angeordnet und dimensioniert sind, dass eine Hauptträgheitsachse der Kugelumlaufmutter sich der Rotationsachse der Gewindespindel zumindest annähert. Die genannte Schrift erzielt dies durch zusätzliche Ausnehmungen auf der Innenseite der Spindelmutter.

Die Schrift DE 10 2016 120 249.5 schlägt vor, flächige Ausnehmungen an der Aussenseite der Spindelmutter als Ausgleichsmittel einzusetzen. Diese haben den Vorteil, dass sie herstelltechnisch einfacher zu realisieren sind.

Die EP 2 713 078 A1 beschreibt einen Kugelgewindetrieb für eine Servolenkung, bei dem die Mantelfläche der Spindelmutter mindestens eine Ausnehmung aufweist und so dimensioniert und angeordnet ist, dass sie dem Kraftübertragungselement als Anschlag bzw. Nut dient und zur Unwuchtkompensation der Spindelmutter beiträgt. Auch die Anmeldeschrift DE 10 2010 046 613 A1 weist eine funktionell ähnliche Auslegung der Spindelmutter aus.

### BESCHREIBUNG DER ERFINDUNG

Die vorliegende Erfindung hat es sich zum Ziel gesetzt, ausgehend vom Stand der Technik, ein Spindelmutter vorzuschlagen, die die Kraft- bzw. Drehmomentableitung zwischen einem Kraftübertragungselement und der Spindelmutter verbessert und gleichzeitig den Aufwand für die Herstellung der Ausgleichsmittel für die Unwucht zu minimieren. Dies wird durch die im Verfahrensanspruch 8 beschriebenen Schritte zur Unwuchtkompensation erreicht. Diese sind weiter unten als Vorgehensweise beschrieben.

Erreicht wird dies dadurch, dass mindestens eine Ausnehmung an der Aussenseite einer Gewindespindel gemäss Verfahrensanspruch 8 so angeordnet und dimensioniert ist, dass sie als Nut oder Anschlagfläche für die Aufnahme eines komplementären Merkmals eines Kraft-übertragungselements dient und zugleich Teil einer die Unwucht (mit-)kompensierenden Ausnehmung darstellt.

In anderer Formulierung bewirkt diese Anordnung und Dimensionierung, dass eine Hauptträgheitsachse der Kombination aus Spindelmutter und Kraftübertragungselement wenigstens annähernd mit einer betrieblichen Rotationsachse der Kombination zusammenfällt.

Üblicherweise wird der Grundkörper einer Spindelmutter (ohne Berücksichtigung von Flanschen oder Anbauteilen) als im Wesentlichen zylindrischen Körper gestaltet, der Ausnehmungen für die Kugelumlenkungen aufweist. Je grösser diese Ausnehmungen sind, bzw. je mehr Kugelumlenkungen vorgesehen sind, desto grösser wird die Unwucht der Spindelmutter sein. Daher wurde bereits vorgeschlagen, die Ausnehmungen am Umfang verteilt anzuordnen, wodurch die Unwucht teilweise wieder kompensiert wird. Alternativ wurde beschrieben, die Kugelumlenkungen selbst so massiv wie möglich auszuführen, um im Zusammenspiel mit den dort umgelenkten Kugeln, den Masseverlust zu kompensieren. Beide Lösungen erhöhen jedoch die Kosten und/oder den Montageaufwand eines Kugelgewindetrieb.

Es hat sich gezeigt, dass flächige Ausnehmungen, wie in Figur 2 beschrieben und gezeigt, die Funktion einer Unwuchtkompensation ebenfalls erfüllen können.

Die vorliegende Erfindung schlägt vor, dass mindestens eine Ausnehmung 38, 48 an der Aussenseite, genauer der Mantelfläche der Spindelmutter 34, 44, angeordnet und so dimensioniert wird, dass sie dem Kraftübertragungselement als (Kraft-)Angriffsfläche bzw. Nut zur Drehmomentübertragung dient und zugleich zur Unwuchtkompensation der Spindelmutter beiträgt.

Als Vorgehensweise hat sich dabei bewährt, die funktionellen Randbedingungen für das Kraftübertragungselement vorrangig zu berücksichtigen. Als "Angriffsfläche" sei hierbei in einem ersten Auslegungsschritt ein Flächenabschnitt der Oberfläche der Spindelmutter definiert, die abweichend von der geometrischen Grundform der Spindelmutter geschaffen wird, um eine geforderte (sprich spezifizierte oder vorgegebene) Drehmomentübertragung zwischen Kraftübertragungselement und Spindelmutter zu erlauben. Diese Fläche ist hierbei nicht eng als nur diejenigen Flächenelemente zu verstehen, auf die Kräfte wirksam übertragen werden können (auf die also Kraftkomponenten normal zur Fläche wirken), sondern wie im Falle einer Nut oder Ausnehmung 22, 23, 38 gezeigt die gesamte Fläche der zu diesem Zweck geschaffenen Ausnehmung.

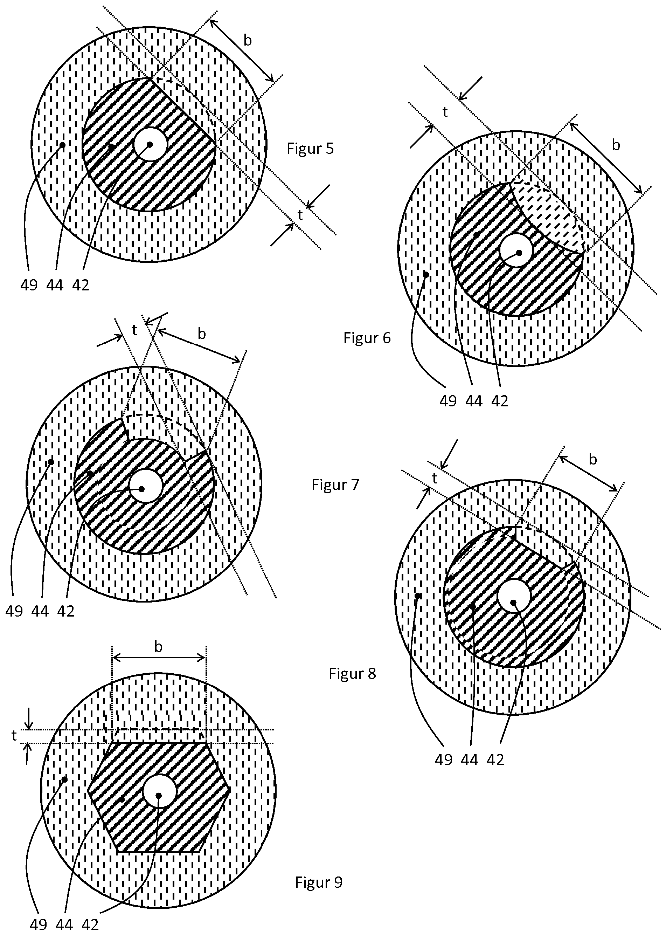

Diese Angriffsfläche wird mindestens so dimensioniert, dass das gewünschte Drehmoment sicher übertragen werden kann, z.B. als Anschlagfläche oder Nut in der Spindelmutter. Das dazu komplementär ausgelegte Merkmal (Passfeder bzw. Mitnehmer) befindet sich dann am Kraftübertragungselement. Dabei wird als zweiter Auslegungsschritt beachtet, dass die Ausnehmung 38, 48 bevorzugt flächig gestaltet werden soll. Flächig bedeutet hierbei, dass die Ausnehmung nicht graben- oder schlitzförmig ist, sondern die Gestalt einer Einsenkung hat, deren kleinste Ausdehnung in der Breite ein mehrfaches grösser ist als die Tiefe der Einsenkung. Die Figuren 5 bis 9 zeigen exemplarisch, dass bei einer flächigen Ausnehmung gemäss Definition dieser Erfindung die Breite b der Ausnehmung (wie ausgeführt) mindestens 3x so gross ist wie die maximale radiale Eintiefung t. Als Bezugspunkte für die Breite b werden hierbei die Punkte gewählt, an denen die Ausnehmung beginnt; anders formuliert, wo die Abweichung von der ursprünglichen Aussengeometrie der Spindelmutter 34, 44 anfängt. Die Messung von b erfolgt dabei in einer Querschnittsebene zur Rotationsachse. Analog ist die Eintiefung t als die maximale, radial gemessene Tiefenabweichung der Ausnehmung von der ursprünglichen Aussengeometrie der Spindelmutter 34, 44 definiert.

Falls ein Polygonprofil an der Spindelmutter 34, 44 vorgesehen ist, lässt sich diese Vorgabe dadurch erfüllen, dass eine Seite des Polygons auf der Spindelmutter abgeflacht ausgeführt wird, wobei die Auslegung der Eintiefung t sich äquivalent wie gezeigt darstellen lässt und die Breite b analog als Abweichung von der ursprünglichen Aussenkontur des gleichmässigen Polygons gesehen werden kann.

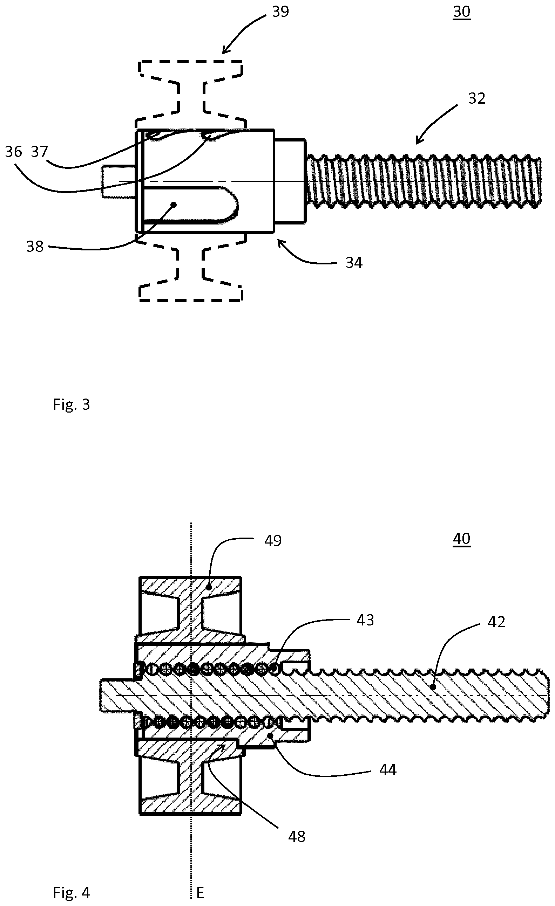

Eine Ausnehmung hat erfindungsgemäss bevorzugt die Form eines Rechtecks mit abgerundeten Ecken bzw. entspricht der Form eines flachen Langlochs, wie in Figur 3, Merkmal 38 illustriert. Die Aussenlinien dieser Fläche sind bevorzugt so angeordnet, dass die geraden Abschnitte der Aussenlinie dieser Fläche parallel oder rechtwinklig zur Mitten-Längsachse der Spindelmutter liegen. Alternativ kann die Ausnehmung quadratisch oder als Kreis oder Oval ausgeführt sein unter Beachtung der oben genannten Bedingung einer flächigen Ausführung.

Die Figuren 5 bis 9 zeigen exemplarisch Schnitte durch einen Kugelgewindetrieb nach Figur 4 entlang einer Ebene E, wobei die Proportionen von Kraftübertragungselement 49 und Spindelmutter 44 nicht massstäblich sind. Zudem wurde die im Querschnitt gezeigte Gewindespindel 42 nur angedeutet. Exemplarisch sind Gestaltungsoptionen für Ausnehmungen gezeigt, wie sie im Sinne der Erfindung realisiert werden können.

In Figur 5 ist die Ausnehmung als flache, ebene, im Querschnitt als Kreissegment angelegte Materialwegnahme realisiert. In Figur 6 dagegen ist die Sekante nicht als Gerade, sondern als radial nach innen gewölbter Boden ausgeführt. Alternativ kann auch, wie in Figur 7 gezeigt, die Materialwegnahme vom Spindelmutterumfang als breiter Graben mit vertikal radial abfallenden Wänden und einer gleichmässigen Tiefe t realisiert werden, wodurch der Boden des Grabens einen Kreisbogen beschreibt. Eine Variation davon zeigt Figur 8, wo der Boden flach ausgeführt ist. Figur 9 hingegen zeigt ein Polygonprofil, das an einer Seite von der Symmetrie abweicht. Dies müsste nicht parallel zu einer Polygonseite erfolgen, sondern könnte auch "über Eck" erfolgen, was am erfinderischen Prinzip jedoch nichts ändert.

Bevorzugt wird die Ausnehmung einen ebenen Boden aufweisen, der je nach technischer Auslegung einen umlaufenden, eingetieften Rand zur Mantelfläche des Mutterkörpers bilden (Figur 8) oder stellenweise flach, also ohne Randstufe, in die Zylindermantelfläche des Mutterkörpers münden kann (Figur 5).

Die Tiefe der Ausnehmung soll so gewählt werden, dass die Dauerfestigkeit des Spindelmutterkörpers nicht gefährdet wird. Je nach Wandstärke des Spindelmutterkörpers wird die Tiefe der Ausnehmung also wenige Zehntelmillimeter bis einige Millimeter betragen.

In einer Weiterbildung der Erfindung kann die Ausnehmung mehrere Abstufungen in der Tiefe aufweisen, sprich mehrere Ebenen, deren Bodenflächen die vorgenannte Bedingung einer Mantelfläche erfüllen, mit jeweils unterschiedlichem Radius zur Spindelmutterlängsachse bzw. als Staffelung von ebenen Flächen vorgenannter Art. Diese somit abgetreppten Flächen bilden somit im Wesentlichen einen stufenförmigen Trichter. Die Bestimmungsgrössen b und t lassen sich auch auf diese Ausgestaltungsart anwenden.

Als dritter Auslegungsschritt wird die Ausnehmung nun so am Umfang angeordnet, dass sie die durch die Kugelumlenkungen erzeugte Unwucht verringert oder - sofern das nicht möglich ist, nur so wenig wie möglich erhöht. Üblicherweise wird das Kraftübertragungselement selbst an einer technisch vorgegebenen Stelle an der Aussenseite der Spindelmutter platziert werden müssen - an welcher Stelle des Umfangs jedoch die Ausnehmung (Kraftangriffsfläche) angeordnet wird, ist in gewissen Grenzen frei wählbar. Daher sind natürlich jene Platzierungen bevorzugt, die bereits zur Verringerung der Unwucht beitragen können.

Alle vorangegangenen Überlegungen gehen davon aus, dass die Drehmomentübertragung durch ein flächig ausgedehntes Nut-Mitnehmer-Prinzip erfolgt; Nut und Mitnehmer greifen formschlüssig ineinander. Es wird dem Fachmann einleuchten, dass deswegen das abgetragene Volumen der Ausnehmung ganz oder teilweise durch das Material des Kraftübertragungselementes aufgefüllt wird und damit nicht für den Ausgleich der Rotationsunwucht zur Verfügung steht. Jedoch wird dies nur streng gelten, wenn das Kraftübertragungselement 49 und die Spindelmutter 43 aus Material mit derselben Dichte besteht. Wird die Spindelmutter aus Stahl gefertigt und das Kraftübertragungselement aus Kunststoff, wird die Differenz der Dichten im bezeichneten Volumen für den Unwuchtausgleich relevant. Auch der umgekehrte Fall ist denkbar, nämlich dass das Kraftübertragungselement aus Material höherer Dichte besteht als die Spindelmutter. Da das Kraftübertragungselement selbst, z.B. in Gestalt eines aufgesetzten Zahnrades, wegen seiner Rotationssymmetrie selbst kein abweichendes Trägheitsmoment liefert, kann es bei der Unwuchtkompensation unberücksichtigt bleiben. Auf diese Weise kann als vierter Auslegungsschritt eine Berücksichtigung der durch das Kraftübertragungselement erfolgende Auffüllung zumindest von Teilen der Ausnehmung durch Material des Kraftübertragungselementes erfolgen.

Eine nach diesen geometrischen Vorgaben als "Angriffsfläche" definierte und angeordnete Oberflächenausnehmung wird nun in einem fünften Auslegungsschritt solange vergrössert, bis keine Abnahme der Unwucht mehr erzielt werden kann. Bevorzugt wird die Ausnehmung entlang der Längsachse der Spindelmutter 34, 44 verlängert. Damit wird eine Materialwegnahme realisiert, die nicht als Angriffsfläche bzw. Kontaktfläche zwischen der Spindelmutter 34,44 und dem Kraftübertragungselement 39, 49 benötigt wird bzw. zur Verfügung steht, sondern vorrangig der Unwuchtkompensation dient.

Sofern diese Ausgleichsmassnahme zur Unwuchtkompensation nicht ausreicht, kann in einem sechsten Auslegungsschritt anstatt einer Ausnehmung zwei oder mehr solche vertiefte Flächen vorgesehen werden, für die die oben genannten Dimensionierungsregeln (Auslegungsschritt zwei) ebenso gelten. Die oben beschriebenen Realisierungsoptionen nach Figur 5 bis 8 können dabei kombiniert werden. Diese weitere Ausnehmung(en) kann/können, aber muss/müssen nicht als Krafteinleitungsort für das Kraftübertragungselement 50 dienen, sondern kann als reines Kompensationselement für den Unwuchtausgleich gestaltet werden. Dies kann erforderlich werden, wenn z.B. eine einzelne Ausnehmung aus Stabilitätsgründen nicht in Frage kommt oder eine so grosse Fläche nicht am Stück zur Verfügung steht. Bevorzugt werden solche Flächen am Spindelmutterkörper am Umfang seitlich oder entlang der Längsachse verschoben.

Der Vorteil einer solchen flächigen Ausnehmung ist, dass sie die Wandstärke der Spindelmutter nur unwesentlich schwächt und vor allem keine Durchgangslöcher in den Innenbereich des Kugelgewindetrieb zur Folge hat. Zudem lässt sie sich idealerweise in einem Aufspann mit den Ausfräsungen für die Kugelumlenkungen von aussen fertigen. Dazu kann z.B. ein Fingerfräser zum Einsatz kommen. Ferner wird die dynamische Unwucht hiermit durch Materialabtrag statt durch Hinzufügen von Ausgleichsgewichten beseitigt.

Ein Fachmann kann, ausgehend von der Lehre der Erfindung, auf verschiedenen Wegen eine Lösung realisieren. Es kann mit Hilfe numerischer Simulationsmodelle das Trägheitsmoment der Spindelmutter-Kraftübertragungselement-Kombination berechnet werden und verschiedene Varianten getestet werden. Die oben aufgeführten Auslegungsschritte dienen dann als Rahmenparameter bei der Berechnung bzw. Simulation. Weiterhin kann durch Versuche an verschiedenen Prototypen schrittweise eine Optimierung an einem entsprechenden Prüfstand ermittelt werden. Die oben beschriebenen Auslegungsschritte sind dabei eine bevorzugte Realisierungsmethode. Im Einzelfall können (abhängig von den Vorgaben) kann die Reihenfolge der Schritte geändert werden, ohne vom erfinderischen Grundgedanken massgeblich abzuweichen.

### FIGURENBESCHREIBUNG

Figur 1 zeigt ein Kugelgewindetrieb 10 wie im Stand der Technik bekannt und wurde oben im Abschnitt "Technischer Hintergrund" erläutert.
Figur 2 zeigt einen Spindelmutterkörper 20 in zwei Ansichten. Links sind Ausnehmungen 24, 25 gezeigt, für Kugelrückführkanäle vorgesehenen Öffnungen. In diese können Kugelumlenkungen eingesetzt werden. 22, 23 Ausnehmungen (zur Kompensation der Unwucht) Ausnehmungen 23, 24 zum Ausgleich einer Unwucht einer in einer Spindelmutter 20. Auf diese Figur wurde ebenfalls oben im Abschnitt "Technischer Hintergrund" eingegangen.
Figur 3 zeigt ein Ensemble aus einem Kugelgewindetrieb 30, bestehend aus einer Gewindespindel 32 und einer Spindelmutter 34, und der möglichen Position für ein Kraftübertragungselement 39 (gestrichelt markiert). Man erkennt, dass in dieser Ausführungsform sowohl die Öffnungen 36, 37 für die Kugelumlenkung (en) von dem Kraftübertragungselement 39 überdeckt würden wie auch die Ausnehmung 38.
In Figur 4 ist eine erfindungsgemässe Ausführung im Querschnitt gezeigt. Man erkennt das Ensemble aus einem Kugelgewindetrieb 40, bestehend aus einer Gewindespindel 42 und einer Spindelmutter 44. Im Raum zwischen Gewindespindel und Spindelmutter sind Kugeln 43 gezeigt, die Kugelumlenkung befindet sich ausserhalb der Schnittebene. Wie am unteren Rand der Spindelmutter 44 erkennbar, ist die Ausnehmung 48 (äquivalent zu Aussparung 38 in Figur 3) durch das Kraftübertragungselement 49 überdeckt. Das Kraftübertragungselement 49 füllt an dieser Stelle somit (je nach Auslegung teilweise) eine Lücke und kompensiert damit teilweise den entstandenen Materialverlust. Ebenfalls eingezeichnet ist die Schnittebene E, die in den Figuren 5 - 9 genutzt wird.

Die Figuren 5 bis 9 zeigen im Querschnitt genau jenen Überlappungsbereich vom Kraftübertragungselement 49, das form- und kraftschlüssig die Spindelmutter 44 umschliesst. Die Lage einer Gewindespindel 42 ist angedeutet. Die Proportionen von Gewindespindel 42, Spindelmutter 44 und Kraftübertragungselement 49 sind nicht massstäblich, die Darstellung ist als Skizze zu verstehen.

In Figur 5 ist die Ausnehmung (entsprechend Merkmalen 22, 23, 38, 48) als flache, ebene, im Querschnitt als Kreissegment erkennbare Abflachung ausgeführt. Diese Ausführung kann e.g. durch planes Abschleifen oder Abfräsen, durch einen spanenden Bearbeitungsprozess oder Kaltumformung erzielt werden. Die Breite b wird über die Abweichung von der ursprünglichen Aussenkontur ermittelt. Die maximale Tiefe t der Materialwegnahme wird radial von der Zentralachse nach aussen gemessen, als maximale Differenz zwischen dem Radius der ursprünglichen und der tatsächlichen Aussenkontur.

In Figur 6 ist die Sekante nicht als Gerade, sondern als radial nach innen gewölbter Boden ausgeführt. Die Breite bemisst sich wie in Figur 5, die Tiefe t ist wiederum als die maximale, radial Abweichung von der ursprünglichen Aussenkontur definiert.

Alternativ kann auch, wie in Figur 7 gezeigt, die Materialwegnahme als breiter Graben mit vertikal radial abfallenden Wänden und einer gleichmässigen Tiefe t realisiert werden, wodurch der Boden des Grabens einen Kreisbogen beschreibt im konstanten Abstand zur Zentralachse. Eine Variation davon zeigt Figur 8, wo der Boden im Vergleich zusätzlich abgeflacht flach ausgeführt ist.

Figur 9 hingegen zeigt ein Polygonprofil (hier Sechseck), das an einer Seite von der Symmetrie abweicht. Dies müsste nicht parallel zu einer Polygonseite erfolgen, sondern könnte auch "über Eck" erfolgen, was zu einem unregelmässigen Siebeneck führen würde.

Bevorzugt wird diese Ausnehmung einen ebenen Boden aufweisen, der je nach technischer Auslegung einen umlaufenden, eingetieften Rand zur Mantelfläche des Mutterkörpers bilden (Figur 8) oder stellenweise flach, also ohne Randstufe, in die Zylindermantelfläche des Mutterkörpers münden kann (wie in Figur 5).

Die Tiefe der Ausnehmung soll so gewählt werden, dass die Dauerfestigkeit des Spindelmutterkörpers nicht gefährdet wird. Je nach Wandstärke des Spindelmutterkörpers wird die Tiefe der Ausnehmung also wenige Zehntelmillimeter bis einige Millimeter betragen.

Verschiedene Modifikationen und Alternativen sind möglich, ohne vom Umfang der Erfindung, wie er in den beigefügten Ansprüchen definiert ist, abzuweichen.

### BEZUGSZEICHENLISTE

- 10, 30, 40: Kugelgewindetrieb
- 12, 42: Gewindespindel
- 13: Mutterkörper
- 14, 34, 44: Spindelmutter
- 15: Kugelumlenkung
- 17: Öffnung
- 20: Spindelmutterkörper
- 22, 23: Ausnehmungen (zur Kompensation der Unwucht)
- 24, 25: Ausnehmungen (für Kugelrückführkanäle vorgesehenen Öffnungen)
- 43: Kugeln
- 36, 37: Öffnung(en)
- 38, 48: Ausnehmung(en)
- 39, 49: Kraftübertragungselement

## Patentansprüche

1. Kugelgewindetrieb (30, 40), umfassend
• eine Gewindespindel (42) und
• eine Spindelmutter (44), die die Gewindespindel (42) koaxial zumindest teilweise umschliesst und
• einer Vielzahl von Kugeln (43), die im Zwischenraum zwischen Gewindespindel (42) und Spindelmutter (44) umlaufen können; und
• einer in einer Öffnung (36, 37) in der Mantelfläche der Spindelmutter (14) angeordneten Kugelumlenkung (15),
• sowie einem Kraftübertragungselement (39, 49), das formschlüssig mit der Spindelmutter (44) verbunden ist
**dadurch gekennzeichnet, dass**
die Mantelfläche der Spindelmutter (34, 44) mindestens eine Ausnehmung (38, 48) aufweist, die gemäss dem Verfahren nach Anspruch 8 so dimensioniert und angeordnet ist, dass sie dem Kraftübertragungselement (39, 49) als Anschlag oder Nut dient und zugleich zur Unwuchtkompensation der Spindelmutter beiträgt.

2. Kugelgewindetrieb nach Anspruch 1, **dadurch gekennzeichnet, dass** die Ausnehmung die Form eines Rechtecks mit abgerundeten Ecken aufweist, die Form eines flachen Langlochs, eines Kreises oder Ovals bzw. einer quadratischen Ausnehmung.

3. Kugelgewindetrieb nach Anspruch 1-2, **dadurch gekennzeichnet, dass** die Ausnehmung einen ebenen Boden aufweist mit einem umlaufenden, zumindest teilweise eingetieften Rand zur Mantelfläche des Mutterkörpers hin oder, ohne Randstufe, in die Zylindermantelfläche des Mutterkörpers mündet.

4. Kugelgewindetrieb nach Anspruch 1-3, **dadurch gekennzeichnet, dass** die radial gemessene Tiefe der Ausnehmung wenige Zehntelmillimeter bis einige Millimeter beträgt.

5. Kugelgewindetrieb nach Anspruch 1-4, **dadurch gekennzeichnet, dass** die Ausnehmung mehrere Abstufungen bzw. Ebenen in der Tiefe aufweisen kann in der Art eines getreppten Trichters.

6. Kugelgewindetrieb (30, 40) nach Anspruch 1-5, **dadurch gekennzeichnet, dass** die Mantelfläche der Spindelmutter (34, 44) mindestens eine weitere Ausnehmung aufweist, die so dimensioniert ist, dass sie zur Unwuchtkompensation beiträgt.

7. Kugelgewindetrieb nach Anspruch 1-6, **dadurch gekennzeichnet, dass** die Ausnehmung durch einen spanenden Bearbeitungsprozess, Schleifen oder durch einen Kaltumformprozess hergestellt wird.

8. Verfahren zur Kompensation der Unwucht eines Ensembles aus mindestens einen Kugelgewindetrieb (30, 40) und einem Kraftübertragungselement (39, 49) wobei der Kugelgewindetrieb (30, 40) eine Spindelmutter und ein Gewindespindel umfasst, mit folgenden Schritten:
i. Festlegen einer Angriffsfläche als ein Flächenabschnitt der Oberfläche der Spindelmutter zur Übertragung eines geforderten Drehmoments zwischen Kraftübertragungselement und Spindelmutter;
ii. Festlegen der Angriffsfläche als eine flächigen Ausnehmung (38, 48) dergestalt, dass die kleinste Breite b der Ausnehmung mindestens 3x so gross ist wie deren maximale radiale Eintiefung t, wobei b in einer Querschnittsebene zur Rotationsachse gemessen wird;
iii. Ausrichten der Ausnehmung so am Umfang, dass die durch die Kugelumlenkungen erzeugte Unwucht verringert oder - sofern das nicht möglich ist, nur so wenig wie möglich erhöht wird;
iv. Berücksichtigen der durch das Kraftübertragungselement erfolgenden Auffüllung von zumindest Teilen der Ausnehmung durch Material des Kraftübertragungselementes;
v. Anschliessendes Vergrössern der Ausnehmung, bevorzugt entlang der Längsachse der Spindelmutter (34, 44) solange, bis keine Abnahme der Unwucht mehr erzielt werden kann.
vi. Vorsehen mindestens einer weiteren Ausnehmung auf der Oberfläche der Spindelmutter gemäss den Vorgaben ii, iii und v, sofern die Massnahmen gemäss i-v nicht ausreichen um die vorgegebene Unwuchtkompensation zu erzielen.

## Claims

1. A ball screw drive (30, 40), comprising
• a threaded spindle (42) and
• a spindle nut (44) which coaxially encloses at least partially the threaded spindle (42) and
• a plurality of balls (43) which may circulate in the intermediate space between the threaded spindle (42) and the spindle nut (44); and
• a ball deflector (15) which is arranged in an opening (36, 37) in the outer surface of the spindle nut (14),
• and a force transmission element (39, 49) which is positively connected to the spindle nut (44),
**characterised in that**
the outer surface of the spindle nut (34, 44) has at least one recess (38, 48) which is dimensioned and arranged according to the method according to claim 8 such that it serves as a stop or groove for the force transmission element (39, 49) and at the same time contributes to the imbalance compensation of the spindle nut.

2. The ball screw drive according to claim 1, **characterised in that** the recess has the shape of a rectangle with rounded corners, the shape of a flat slot, a circle or oval and/or a square recess.

3. The ball screw drive according to claims 1 - 2, characterised that the recess has a planar base with a peripheral, at least partially recessed, edge toward the outer surface of the nut body or without a stepped edge leads into the cylindrical outer surface of the nut body.

4. The ball screw drive according to claims 1 - 3, **characterised in that** the radially measured depth of the recess ranges from a few tenths of a millimetre to a few millimetres.

5. The ball screw drive according to claims 1 - 4, **characterised in that** the recess may have a plurality of stepped portions and/or planes in the depth, in the manner of a stepped funnel.

6. The ball screw drive (30, 40) according to claims 1 - 5, **characterised in that** the outer surface of the spindle nut (34, 44) has at least one further recess which is dimensioned such that it contributes to the imbalance compensation.

7. The ball screw drive according to claims 1 - 6, **characterised in that** the recess is produced by a material-removing treatment process, grinding or by a cold forming process.

8. A method for the imbalance compensation of an assembly consisting of at least one ball screw drive (30, 40) and a force transmission element (39, 49), wherein the ball screw drive (30 40) comprises a spindle nut and a threaded spindle, including the following steps:
i. fixing an action surface as a surface portion of the surface of the spindle nut for transmission of a required torque between the force transmission element and the spindle nut;
ii. fixing the action surface as a surface recess (38, 48) such that the smallest width b of the recess is at least 3 times as large as the maximum radial indentation t thereof, wherein b is measured in a cross-sectional plane to the rotational axis;
iii. aligning the recess on the periphery such that the imbalance produced by the ball deflectors is reduced or - if this is not possible - is increased only as little as possible;
iv. taking into account the filling up of at least parts of the recess, which is carried out by means of the force transmission element and by the material of the force transmission element;
v. subsequently increasing the recess, preferably along the longitudinal axis of the spindle nut (34, 44) until a reduction of the imbalance may no longer be achieved;
vi. providing at least one further recess on the surface of the spindle nut according to the specifications ii, iii and v, provided the measures according to i-v are insufficient in order to achieve the predetermined imbalance compensation.

## Revendications

1. Vis d'entraînement à billes (30, 40), comprenant
• une broche filetée (42), et
• un écrou de broche (44), qui entoure coaxialement au moins en partie la broche filetée (42) et
• une pluralité de billes (43), qui peuvent circuler dans l'espace intermédiaire entre la broche filetée (42) et l'écrou de broche (44) ; et
• une dérivation de billes (15) disposée dans une ouverture (36, 37) dans la surface d'enveloppe de l'écrou de broche (14),
• ainsi qu'un élément de transmission de force (39, 49), qui est relié par conformité de forme à l'écrou de broche (44),
**caractérisée en ce que**
la surface d'enveloppe de l'écrou de broche (34, 44) comporte au moins un évidement (38, 48) qui est conformément au procédé selon la revendication 8, dimensionné et disposé de telle sorte qu'il sert de butée ou de rainure à l'élément de transmission de force (39, 49) et contribue en même temps à la compensation de déséquilibre de l'écrou de broche.

2. Vis d'entraînement à billes selon la revendication 1, **caractérisée en ce que** l'évidement comporte la forme d'un rectangle avec des coins arrondis, la forme d'un trou oblong plat, d'un cercle ou d'un ovale ou bien d'un évidement quadratique.

3. Vis d'entraînement à billes selon la revendication 1-2, **caractérisée en ce que** l'évidement comporte un fond plan avec un bord périphérique approfondi au moins en partie débouchant vers la surface d'enveloppe du corps d'écrou ou, sans gradin de bord, dans la surface d'enveloppe cylindrique du corps d'écrou.

4. Vis d'entraînement à billes selon la revendication 1-3, **caractérisée en ce que** la profondeur radialement mesurée de l'évidement comporte quelques dixièmes de millimètre jusqu'à plusieurs millimètres.

5. Vis d'entraînement à billes selon la revendication 1-4, **caractérisée en ce que** l'évidement peut comporter plusieurs gradins ou plans dans la profondeur sous la forme d'un entonnoir étagé.

6. Vis d'entraînement à billes (30, 40) selon la revendication 1-5, **caractérisée en ce que** la surface d'enveloppe de l'écrou de broche (34, 44) comporte au moins un autre évidement qui est dimensionné de telle sorte qu'il contribue à la compensation de déséquilibre.

7. Vis d'entraînement à billes selon la revendication 1-6, **caractérisée en ce que** l'évidement est fabriqué par un processus d'usinage par enlèvement de copeaux, rectification ou par un processus de déformation à froid.

8. Procédé de compensation du déséquilibre d'un ensemble d'au moins une vis d'entraînement à billes (30, 40) et d'un élément de transmission de force (39, 49), sachant que la vis d'entraînement à billes (30, 40) comprend un écrou de broche et une broche filetée, avec les étapes suivantes :
i. détermination d'une surface de préhension en tant que section de surface de la surface de l'écrou de broche pour la transmission d'un couple requis entre l'élément de transmission de force et l'écrou de broche,
ii. détermination d'une surface de préhension en tant qu'évidement de surface (38, 48) de telle façon que la plus petite largeur b de l'évidement est au moins 3 x aussi grande que la cavité t radiale maximale de celui-ci, sachant que b est mesurée dans un plan de section transversal par rapport à l'axe de rotation,
iii. orientation de l'évidement sur la périphérie de telle manière que le déséquilibre produit par les dérivations de billes diminue ou, dans la mesure où cela n'est pas possible, soit augmenté le moins possible,
iv. prise en considération du remplissage survenu par l'élément de transmission de force au moins des parties de l'évidement par le matériau de l'élément de transmission de force,
v. agrandissement suivant de l'évidement, de préférence le long de l'axe longitudinal de l'écrou de broche (34, 44) jusqu'à ce qu'aucune diminution du déséquilibre ne puisse être obtenue,
vi. prévision d'au moins un autre évidement à la surface de l'écrou de broche selon les consignes ii, iii et v dans la mesure où les mesures selon i-v ne sont pas suffisantes pour obtenir la compensation de déséquilibre prédéfinie.
